# EUROPÄISCHE PATENTANMELDUNG

(11) **EP 0 955 780 A1**
(43) Veröffentlichungstag der Anmeldung: **10.11.1999**
(21) Anmeldenummer: 98440076.2
(22) Anmeldetag: 17.04.1998
(51) Int. Cl.: H04Q 7/38

(54) **Drahtloses Telekommunikationssystem, Basisstation und mobiles Teilnehmerendgerät, die Funksignale entsprechend einer Frequenzsprungfolge austauschen**

(71) Anmelder: ALCATEL, 75088 Paris (FR)
(72) Erfinder: Kuehn Edgar Wolfram, 70563 Stuttgart (DE); Barth Ulrich, 70825 Münchingen (DE); Sperber Christoph, 75175 Pforzheim (DE); Deblancs Philippe, 75015 Paris (FR); Dugast Xavier, 75015 Parijs (FR)
(74) Vertreter: Knecht, Ulrich Karl, Dipl.-Ing.

(57) **Zusammenfassung**

Es sind drahtlose Telekommunikationssysteme mit mindestens einer Basisstation und mit mobilen Teilnehmerendgeräten bekannt, bei denen Funksignale in verschiedenen Zeit- und Frequenzlagen gesendet und empfangen werden. Sowohl auf den Nutzkanälen wie auch auf den Signalisierungskanälen werden die Funksignale entsprechend einer vorgegebenen Frequenzsprungfolge übertragen.

Es soll nun erreicht werden, daß der Signalisierungskanal für die Funkübertragung von verschiedenen Signalisierungssignalen (SB, RAB, AGB, PB, FB) geeignet ist, um für verschiedene Zwecke, insbesondere für die Registrierung und für den Suchruf einsetzbar zu sein, und daß eine störresistente Funkübertragung durch Verwendung von Frequenzsprungfolgen möglich ist. Dazu wird vor-geschlagen, daß die Basisstation und die Teilnehmerendgeräte Steuermittel zur Steuerung des Frequenzlagenwechsels enthalten, die für einen ersten Teil des Zeitrasters (MF) nach einem ersten Verfahren eine erste Frequenzsprungfolge (SHS) und für mindestens einen weiteren Teil des Zeitrasters nach einem zweiten Verfahren eine zweite Frequenzsprungfolge (THS) erzeugen. Dadurch werden bei der Funkübertragung auf dem Signalisierungskanal mindestens zwei verschiedene Verfahren zur Erzeugung von Frequenzsprungfolgen eingesetzt, die verschiedene entsprechend optimal angepaßte Frequenzsprungfolgen (SHS, THS) erzeugen.

## Beschreibung

Die Erfindung betrifft ein drahtloses Telekommunikationssystem mit mindestens einer Basisstation und mit mobilen Teilnehmerendgeräten gemäß dem Oberbegriff des Anspruch 1. Außerdem betrifft die Erfindung eine Basisstation sowie ein mobiles Teilnehmerendgerät für ein solches drahtloses Telekommunikationssystem gemäß dem Obergriff eines der nebengeordneten Ansprüche.

Aus US 4,554,668 ist ein drahtloses Telekommunikationssystem mit mindestens einer Basisstation und mit mobilen Teilnehmerendgeräten bekannt. Das dort beschriebene System enthält mehrere Basisstationen, die jeweils eine Funkzelle versorgen und die jeweils mit den sich darin befindenden Teilnehmerendgeräten Funksignale austauschen. Die Funksignale werden in verschiedenen Zeit- und Frequenzlagen gesendet und empfangen. Dabei wird entsprechend einer vorgegebenen Frequenzsprungfolge zwischen den Frequenzlagen gewechselt. Sowohl die Nutzsignale wie auch die Signalisierungssignale werden auf diese Weise übertragen, d.h. sowohl auf den Nutzkanälen wie auch auf den Signalisierungskanälen werden Funksignale innerhalb eines in Zeitlagen unterteilten Zeitrasters und entsprechend der vorgegebenen Frequenzsprungfolge in wechselnden Frequenzlagen ausgetauscht. Jedes der dort beschriebenen Teilnehmerendgeräte verwendet eine andere ihm zugewiesene individuelle Frequenzsprungsfolge. Diese verschiedenen individuellen Frequenzsprungfolgen werden mit einem an sich bekannten Verfahren erzeugt, etwa mit dem dort in Spalte 3, Zeile 42 ff. genannten Verfahren zur Erzeugung von Frequenzsprungfolgen nach D.V. Sarwattee und M.B. Pursely. Dieses und andere Verfahren zur Erzeugung von Frequenzsprungfolgen sind an sich unter dem Begriff "frequency hopping algorithm" bekannt und dienen dazu, eine Funkübertragung von Nutzsignalen störresistent zu machen.

Aus EP 423 715 B1 ist ein drahtloses Telekommunikationssystem bekannt, bei dem auf Nutzkanäle wie auch auf Signalisierungskanälen eine Funkübertragung entsprechend einer vorgegebenen Frequenzsprungfolge durchgeführt wird. Das dort beschriebene Telekommunikationssystem enthält mehrere gleichberechtigte mobile Teilnehmerendgeräte, die direkt miteinander Funksignale austauschen.

Aus EP 467 600 B1 ist ein drahtloses Telekommunikationssystem bekannt, bei dem zwischen Basisstationen und mobilen Teilnehmerendgeräten Funksignale innerhalb eines in Zeitlagen unterteilten Zeitrasters und auf einer vorgegebenen Frequenzlage ausgetauscht werden. Die Funksignale können Signalisierungssignale sein. Eine Funkübertragung unter Verwendung von Frequenzsprungfolgen ist dort nicht beschrieben.

Aufgabe der Erfindung ist es, das eingangs genannte drahtlose Telekommunikationssystem so zu verbessern, daß der Signalisierungskanal für die Funkübertragung von verschiedenen Signalisierungssignalen geeignet ist, um für verschiedene Zwecke, insbesondere für die Registrierung und für den Suchruf einsetzbar zu sein, und daß eine störresistente Funkübertragung durch Verwendung von Frequenzsprungfolgen möglich ist. Außerdem soll eine Basisstation sowie ein mobiles Teilnehmerendgerät für ein solches drahtloses Telekommunikationssystem vorgeschlagen werden.

Gelöst wird die Aufgabe durch ein drahtloses Telekommunikationssystem, bei dem die Basisstation und die Teilnehmerendgeräte Steuermittel zur Steuerung des Frequenzlagenwechsels enthalten, die für einen ersten Teil des Zeitrasters nach einem ersten Verfahren eine erste Frequenzsprungfolge und für mindestens einen weiteren Teil des Zeitrasters nach einem zweiten Verfahren eine zweite Frequenzsprungfolge erzeugen.

Dadurch werden bei der Funkübertragung auf dem Signalisierungskanal mindestens zwei verschiedene Verfahren zur Erzeugung von Frequenzsprungfolgen eingesetzt. Es wird also eine Funkübertragung von verschiedenen Signalisierungssignalen auf einem Signalisierungskanal ermöglicht, die verschiedenen Zwecken dienen kann, wobei verschiedene entsprechend optimal angepaßte Frequenzsprungfolgen verwendet werden.

Besonders vorteilhaft ist es, wenn die Basisstation und die Teilnehmerendgeräte mit den Steuermitteln verbundene Auswahlmittel enthalten, die die momentane Zeitlage ermitteln und dann aus den mindestens zwei verschiedenen Verfahren dasjenige auswählen, nach denen die Steuermittel den Frequenzlagenwechsel steuern. Damit wird auf einfache Weise anhand der momentanen Zeitlage erkannt, welches der verschiedenen Verfahren zur Erzeugung von Frequenzsprungfolgen eingesetzt werden soll.

Es ist auch besonders vorteilhaft, wenn die Basisstation und die Teilnehmerendgeräte Speichermittel enthalten, in denen eine vordefinierte Frequenzsprungfolge abgespeichert ist, die die erste Frequenzsprungfolge bildet, und wenn zur Übertragung von Registrierungssignalen für den Aufbau einer Funkverbindung der Frequenzwechsel nach dieser vordefinierten Frequenzsprungfolge gesteuert wird. Damit wird erreicht, daß sowohl die Basisstation als auch ein jedes Teilnehmerendgerät bereits vor dem Aufbau einer Funkverbindung diejenige Frequenzsprungfolge kennen, die bei der Übertragung der Registrierungssignale auf dem Signalisierungskanal eingesetzt wird. Deshalb kann sofort unmittelbar beim Aufbau der Funkverbindung bereits der Vorteil des "frequency hopping" genutzt werden.

Außerdem ist es von Vorteil, wenn die Basisstation an die Teilnehmerendgeräte ein Codewort sendet, um daraus eine pseudozufällige Frequenzsprungfolge zu berechnen, nach der die Funkübertragung während der Suchrufprozedur gesteuert wird. Damit wird erreicht, daß bereits für die Übertragung von Suchrufsignalen eine berechnete Frequenzsprungfolge verwendet wird, d.h. eine Frequenzsprungfolge, die aufgrund des Codeworts entwickelt wird und nicht vollständig abgespeichert werden muß.

Weitere vorteilhafte Ausführungen ergeben sich aus den Unteransprüchen.

Im folgenden wird die Erfindung anhand eines Ausführungsbeispieles und unter Zuhilfenahme der folgenden Figuren näher beschrieben:
- Figur 1,: die schematisch den Aufbau eines erfindungsgemäßen drahtlosen Telekommunikationssystemes zeigt;
- Figur 2,: die die Struktur eines Zeitrasters zeigt, anhand dem die Funkübertragung durchgeführt wird;
- Figur 3a,: die ein Blockschaltbild der Verschaltung eines Auswahlmittels und eines Steuermittels darstellt;
- Figur 3b,: die schematisch die zeitliche Abfolge des Frequenzwechsels innerhalb des ersten und zweiten Teils des Zeitrasters zeigt, und
- Figur 4,: die Blockschaltbilder von einem mobilen Teilnehmerendgerät und von einer Basisstation zeigt.

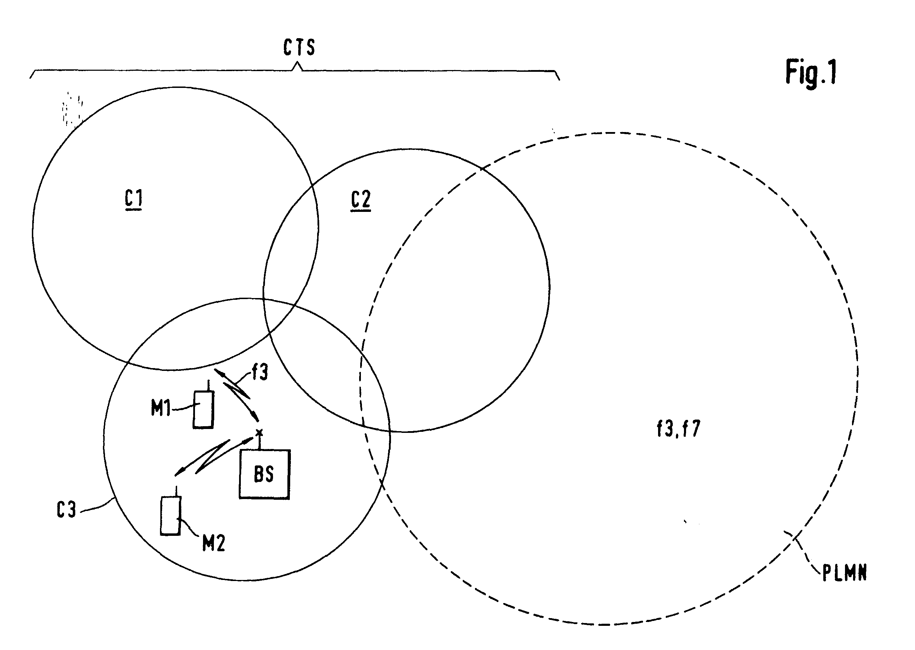

Die Fig. 1 zeigt schematisch den Aufbau eines Telekommunikationssystems CTS mit drei Basisstationen, von denen exemplarisch nur eine Basisstation BS dargestellt ist. Jede Basisstation versorgt eine Funkzelle C1, C2 und C3, in der sich mobile Teilnehmerendgeräte befinden. Exemplarisch sind nur zwei Teilnehmerendgeräte M1 und M2 dargestellt, die sich in der Funkzelle C3 befinden. Ein Teil dieser Funkzelle C3 wie auch ein Teil der Funkzelle C2 überlappen sich mit dem Versorgungsbereich eines öffentlichen Mobilfunknetzes PLMN, in dem die Frequenzlagen f3 und f7 verwendet werden. Diese Frequenzlagen werden auch in dem drahtlosen Telekommunikationssystem CTS verwendet, so daß es zu Interferenzen kommen kann. In Fig. 1 ist dargestellt, daß das mobile Teilnehmerendgerät M1 momentan in der Frequenzlage f3 an die Basisstation BS ein Signalisierungssignal sendet und daher mit dem Mobilfunknetz PLMN interferiert.

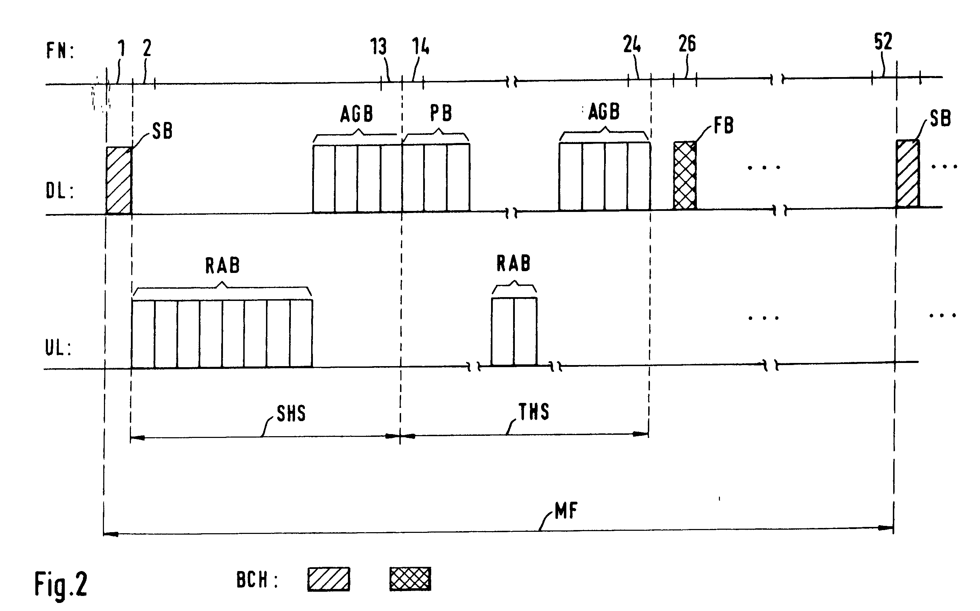

Die erfindungsgemäße Übertragung der Funksignale auf dem Signalisierungskanal wird nun näher anhand der Figur 2 beschrieben, die die Struktur eines Zeitrasters wiedergibt. Das Zeitraster entspricht einem Multirahmen MF, der 52 TDMA-Zeitrahmen umfaßt. Jeder Zeitrahmen wiederum umfaßt 8 TDMA-Zeitschlitze. Für die Übertragung der Signalisierungssignalen werden keine Zeitschlitze zugteilt. Jedoch werden für die Übertragung von Nutzsignalen den mobilen Teilnehmerendgeräten jeweils ein Zeitschlitz als sogenannter "traffic channel" zuteilt.

Um die Übertragung von den Signalisierungssignalen zwischen der Basisstation BS und dem mobilen Teilnehmerendgerät M1 zu verdeutlichen, zeigt Fig, 2 die zeitliche Abfolge der auf dem Abwärtskanal DL sowie auf dem Aufwärtskanal UL innerhalb des Multirahmens MF übertragenen Signalisierungssignale. In diesem Beispiel handelt es sich dabei um verschiedene Signalisierungsbursts SB, FB, AGB, PB und RAB, die folgenden Zwecken dienen: Die Synchronisierungsbursts SB und die Frequenzkorrekturbursts FB dienen der Abstimmung zwischen Sender und Empfänger; die Zugangsfreigabebursts AGB dienen der Zuweisung eines Nutzkanals oder Steuerungskanals durch die Basisstation; der Registrierungsburst PB dient dem Verbindungsaufbau einer Funkverbindung und der Zugriffsburst RAB dient der Anfrage bei der Basisstation nach der Zuweisung eines Steuerungskanals.

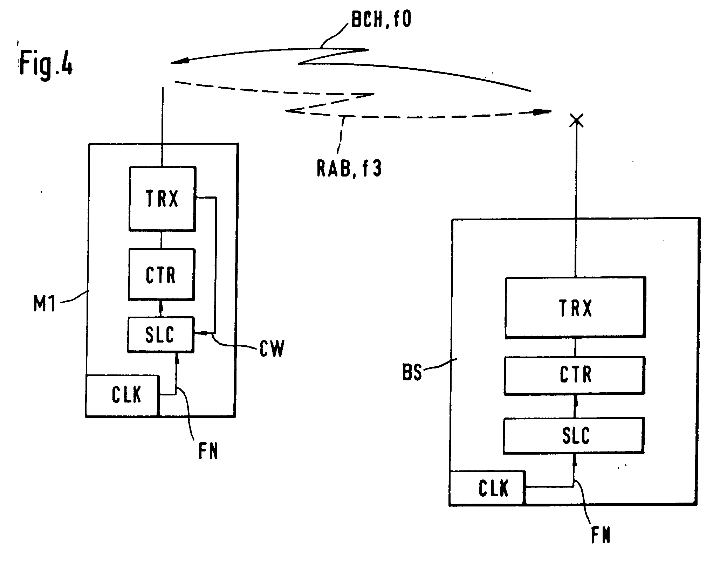

Der Multirahmen MF umfaßt 52 Zeitrahmen mit den Nummern FN = 1 bis 52. In den Zeitrahmen mit den Nummern FN=1 und FN= 26 werden auf dem Abwärtskanal DL auf der festen Frequenz f0 der Synchronisationsburst SB bzw. der Frequenzkorrekturburst FB von der Basisstation an die Teilnehmerendgeräte gesendet. Damit bilden die Zeitrahmennummern FN = 1 und 26 einen Rundspruchsignalisierungskanal (s. BCH in Fig. 4), auf dem Informationen zur Snychronisierung und Frequenzkorrektur an alle Teilnehmerendgeräte ausgesendet werden. Der Rundspruchsignalisierungskanal ist ein unidirektionaler Kanal in Abwärtsrichtung, auf dem die Basisstationen mit maximaler Leistung Informationen senden, damit alle sich im sogenannte "stand-by state" befindenden Teilnehmerendgeräte die Informationen empfangen können. Die Frequenzlage f0 des Kanals kennen alle Teilnehmerendgeräte des Telekommunikationssystems. Sollten dennoch einzelne Teilnehmerendgeräte, insbesondere systemfremde Teilnehmerendgeräte die Frequenzlage f0 nicht kenne, so wird über alle Frequenzlagen gesucht (scanning).

In den anderen Zeitrahmen FN 2 -25 und FN = 27 -52 werden die anderen Signalisierungssignale für die o.g. Initialisierung und die Registrierung übertragen. Die entsprechenden Registrierungskanäle und Suchrufkanäle sind Duplexkanäle. Zur Übertragung der verschiedenen Signalisierungssignale innerhalb des Multirahmens MF werden verschiedene Frequenzsprungverfahren eingesetzt, indem in einem ersten Teil eine erste vordefinierte Frequenzsprungfolge SHS und in einem zweiten Teil eine zweite berechnete Frequenzsprungfolge THS verwendet wird. Der in Fig. 2 dargestellte Multirahmen MF erstreckt sich von der Zeitrahmennummer FN = 1 bis zur Zeitrahmennummer FN = 52 und ist wie folgt aufgeteilt: In einen ersten Teil, der sich von FN = 2 bis FN =13 erstreckt und der für die Registrierungsprozedur genutzt wird, und in einen zweiten Teil, der sich von FN = 14 bis FN = 24 erstreckt und der für die Suchrufprozedur genutzt wird.

Innerhalb des ersten Teils werden mittels der ersten vordefinierten Frequenzsprungfolge SHS zunächst 8 Zugriffsbursts RAB auf dem Aufwärtskanal UL übertragen und anschließend 4 Zugangsfreigabebursts AGB auf dem Abwärtskanal DL übertragen. Die Zugriffsbursts RAB sind sogenannte "random access bursts", die das Teilnehmerendgerät zur Initialisierung an die Basisstation sendet. Die Zugangsfreigabebursts AGB sind sogenannte "access grant bursts", die die Basisstation zur Bestätigung der Registrierung an das Teilnehmerendgerät zurücksendet. Damit ist die Registrierung abgeschlossen. Die verwendete vordefinierte erste Frequenzsprungfolge SHS ist sowohl in der Basisstation als auch dem Teilnehmerendgerät gespeichert. Demnach kann bei der Registrierung sofort mit "frequency hopping" übertragen werden, um möglichst Interferenzen mit überlappenden Mobilfunknetzen zu vermeiden.

An den ersten Teil, an die Registrierungsphase, schließt sich der zweite Teil an, die Suchrufphase, die mit dem Zeitrahmen FN= 14 beginnt und sich bis zum Zeitrahmen FN = 24 hin erstreckt. Innerhalb diese zweiten Teils wird gemäß einer berechneten Frequenzsprungfolge THS übertragen, wobei zunächst auf dem Abwärtskanal DL 3 Suchrufbursts PB, sogenannte "paging bursts", dann 3 Zugriffsbursts RAB und anschließend 4 Zugangsfreigabebursts übertragen werden.

Die Suchrufbursts PB werden von der Basisstation BS an das Telekommunikationsendgerät gesendet, das daraufhin die Zugriffsburts RAB zurücksendet, um sich an der Basisstation BS registrieren zu lassen. Die Suchrufphase wird durch 4 Zugangsfreigabebursts AGB abgeschlossen, die die Basisstation an das Teilnehmerendgerät sendet. Die während der Suchrufphase verwendete Frequenzsprungfolge wird sowohl innerhalb der Basisstation, als auch innerhalb des Teilnehmerendgerätes nach einem iterativen Verfahren, nämlich dem üblicherweise für Nutzkanäle verwendeten "total frequency hopping algorithmus " von Lempel-Greenberger berechnet. Dabei wird von einem 16 bit-wertigen Codeword ausgegangen, daß die Basisstation an das Teilnehmerendgerät sendet und das als Eingangsdatum für die Berechnung der Frequenzsprungfolge dient. Der Algorithmus der zu berechnenden Frequenzsprungfolge verknüpft das 16-Bit-wertige Eingangsdatum entsprechend der Funktion eines rückgekoppelten Schieberegisters und erzeugt somit eine pseudo-zufällige Frequenzsprungfolge. Damit wird während der Suchrufphase bereits ein Frequenzsprungverfahren eingesetzt, das an sich normalerweise zur Übertragung von Nutzsignalen auf den Verkehrskanälen eingesetzt wird. Somit sind bereits während der Registrierung die Vorteile des "total frequency hopping" gegeben. Nach der Registrierung erfolgt der weitere Aufbau der Funkverbindung, der hier nicht Gegenstand der Erfindung ist.

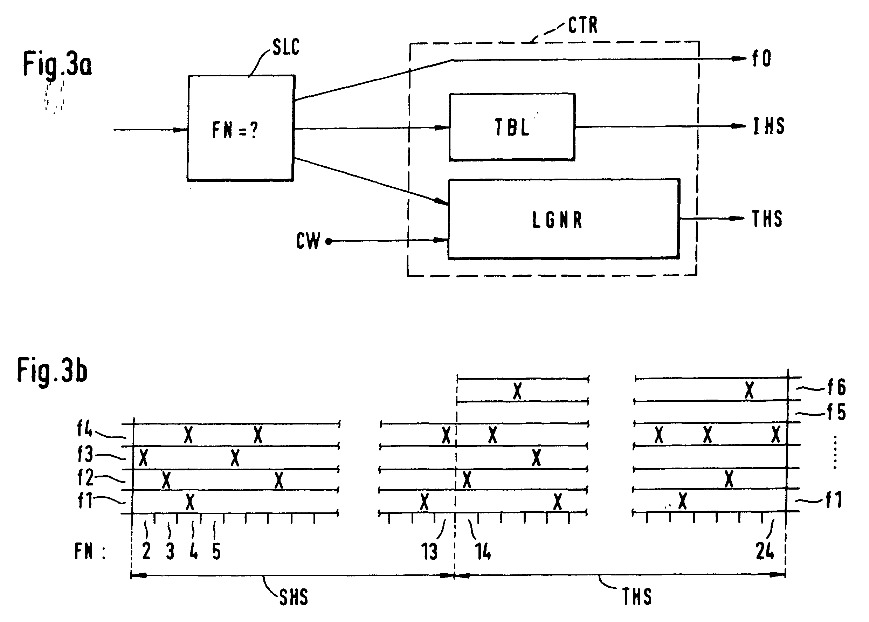

Anhand der Figuren 3 und 4 werden nun der Aufbau und die Funktion eines mobilen Teilnehmerendgerätes und einer Basisstation näher beschrieben:

Die Figur 3 ist unterteilt in die Figuren 3a und 3b. In der Figur 3a ist schematisch eine Verschaltung von Bauteilen dargestellt, die sowohl die Basisstation als auch das Teilnehmerendgerät enthalten. Diese Elemente sind ein Auswahlmittel SLC und ein damit verbundenes Steuermittel CTR. Das Auswahlmittel SLC prüft die momentane Zeitlage, d.h. denjenigen Zeitrahmen mit der Nummer FN, in dem momentan gesendet und empfangen wird. Da die Basisstation und die Teilnehmerendgeräte aufeinander synchronisiert sind, kann die momentane Zeitlage durch Abfrage an einer internen Taktschaltung CLK einfach ermittelt werden. Die Zeitlage bestimmt sich aus der aktuellen Zeitrahmennummer FN und dient dazu festzustellen, welcher der zuvor anhand der Figur 2 beschriebenen Teilabschnitte des Multirahmens MF momentan gilt.

Das Auswahlmittel SLC wertet die Rahmennummer FN aus und wählt eines von den nachfolgend beschriebenen drei Möglichkeiten aus, nach denen dann das Steuermittel CTR die momentan zu benutzende Frequenzsprungfolge erzeugt. Diese drei verschiedenen Möglichkeiten sind in Figur 3a symbolhaft wie folgt dargestellt:

Eine der Möglichkeiten ist es keine Frequenzsprungfolge an sich zu erzeugen, sondern lediglich eine feste Frequenz f0 vorzugeben. Diese Möglichkeit ist für das Aussenden der SB-Burst und FB-Bursts in den Zeitlagen FN=1 bzw. FN=26 vorgesehen, um Information an alle Teilnehmerendgeräte auf dem zuvor genannten Rundspruchsignalisierungkanal zu übertragen. Als weitere Möglichkeit wird das erste Verfahren zur Erzeugung der vordefinierten Frequenzsprungfolge SHS angewendet. Dieses Verfahren wird in Fig. 3a symbolisch durch einen Block TBL dargestellt, der anzeigen soll, daß das erste Verfahren ein Speicherleseverfahren ist, bei dem aus einer Nachschlagetobelle, einem sogenannten "look up table", die Werte für die vordefinierte Frequenzsprungfolge SHS ausgelesen werden. Als weitere Möglichkeit wird das zweite Verfahren zur Berechnung von pseudo-zufälligen Frequenzsprungfolgen THS angewendet, das symbolisch durch einen Block LGMR dargestellt ist. Das Berechnungsverfahren zur Erzeugung der pseudozufälliger Frequenzsprungfolgen geht von einem Eingangswert aus, den die Basisstation BS in Form des n-wertigen Codewortes CW vorgibt (hier n= 16) und das den Eingangszustand eines n-stufigen rüchgekoppleten Schieberegisters entspricht. Als Berechnungsverfahren, das die Funktion eines rückgekoppelten n-stufigen Schieberegisters repräsentiert, wird hier beispielsweise ein Verfahren nach Lempel Greenberger verwendet.

In Figur 3b ist schematisch die von Zeitrahmen zu Zeitrahmen wechselnde Belegung der Frequenzlagen innerhalb des erste und zweiten Teils des Multirahmens MF dargestellt. Im ersten Teil ist die erste vordefinierte Frequenzsprungfolge SHS dargestellt, bei der zwischen 4 Frequenzlagen f1, f2, f3 und f4 gewechselt wird. Das Muster der Frequenzsprungfolge ist in Speichermitteln abgelegt, auf die die Steuermittel zugreifen. Der zweite Teil zeigt eine pseudo-zufällige Frequenzsprungfolge THS, bei der zwischen 6 Frequenzlagen f1 bis f6 gewechselt wird. Das Muster dieser Frequenzsprungfolge ist nicht in einem Speichermittel fest abgspeichert, sondern wird berechnet. In Figur 3b ist also dargestellt, daß für die erste Frequenzsprungfolge SHS weniger Frequenzlagen zur Verfügung gestellt werden als für die zweite Frequenzsprungfolge THS. Dies soll zeigen, daß es sinnvoll sein kann, für die Registrierungsprozedur im ersten Teil weniger Frequenzlagen, also einen geringeren Spreizfaktor, zur Verfügung zustellen, als für die Suchrufprozedur im zweiten Teil.

Figur 4 zeigt schematisch den Aufbau eines mobilen Teilnehmerendgerätes M1 sowie den Aufbau einer Basisstation BS. Die Basisstation sendet zu dem sich im sogenannten "stand-by state" befindenden Teilnehmerendgerät ein Signalisierungssignal auf dem Rundspruchsignalisierungskanal BCH und zwar in der Zeitlage FN = 1 und in der festen Frequenzlage f0. Die Registrierungsphase hat also noch nicht begonnen.

Das in Figur 4 schematisch dargestellte Teilnehmerendgerät M1 enthält einen Sendeempfänger TRX, ein damit verbundenes Steuermittel CTR, ein damit verbundenes Auswahlmittel SLC und eine damit verbundene Taktschaltung CLK. Die Taktschaltung gibt die aktuelle Rahmennummer, hier FN =1 an, die das Auswahlmittel auswertet, um für die Steuerung das zu verwendende Verfahren auszuwählen. Im Anschluß an den momentane Zeitlage FN = 1 folgt die Zeitlage FN = 2, d.h. der Beginn der Registrierungsphase, bei der gemäß der ersten vordefinierten Frequenzsprungfolge übertragen wird. Das Teilnehmerendgerät ist also bereit, im nächsten Zeitrahmen FN = 2 einen Zugriffsburst RAB auf der Frequenzlage f3 an die Basisstation BS zu senden und wird für die Registrierung die erste Frequenzsprungfolge aus dem Speichermittel lesen. Außerdem ist durch die Auswertung der Empfangssignale das Teilnehmerendgerät über das Codewort CW informiert und kann für die später noch durchzuführende Suchrufprozedur die pseudo-zufällige Frequenzsprungfolge berechnen.

Die Basisstation enthält einen Sendeempfänger TRX, ein damit verbundenen Steuermittel CTL sowie ein Auswahlmittel SLC, das mit dem Steuerteil verbunden ist. Weiterhin enthält die Basisstation eine Taktschaltung CLK, die die Rahmennummer FN angibt. In dem in Figur 4 dargestellten Beispiel befindet sich die Funkübertragung beim Übergang von FN = 1 zu FN = 2. Das bedeutet, daß die Basisstaion zunächst auf der Frequenzlage f0 sendet und dann einen Rahmentakt später ist auf der Frequenzlage f3 empfängt.

In der Beschreibung der Erfindung wird ein physikalischer Signalisierungskanal betrachtet, auf den mehrere logische Signallisierungskanäle abgebildet werden durch sogenanntes "mapping". Es ist auch denkbar mehrere physikalische Signalisierugskanäle einzurichten. In beiden Fällen könne erfindungsgemäß verschiedene Frequenzsprungverfahren für die verschiedenen Phasen der Signalisierung, insbesondere für die Registrierungsphase und die Suchrufphase angewendet werden.

## Patentansprüche

1. Drahtloses Telekommunikationssystem (CTS) mit mindestens einer Basisstation (BS) und mit mobilen Teilnehmerendgeräten (M1, M2), die mit der mindestens einen Basisstation (BS) Funksignale auf einem Signalisierungskanal innerhalb eines in Zeitlagen (FN) unterteilten Zeitrasters (MF) und entsprechend einer vorgebbaren Frequenzsprungfolge in wechselnden Frequenzlagen (f1, f2, ... , f6) austauschen,
**dadurch gekennzeichnet**,
daß die mindestens eine Basisstation (BS) und die Teilnehmerendgeräte (M1, M2) Steuermittel (CTR) zur Steuerung des Frequenzlagenwechsels enthalten, die für einen ersten Teil des Zeitrasters (MF) nach einem ersten Verfahren (TBL) eine erste Frequenzsprungfolge (SHS) und für mindestens einen weiteren Teil des Zeitrasters (MF) nach einem zweiten Verfahren (LGNR) eine zweite Frequenzsprungfolge (THS) erzeugen.

2. Drahtloses Telekommunikationssystem (CTS) nach Anspruch 1, dadurch gekennzeichnet, daß die Basisstation (BS) und die Teilnehmerendgeräte (M1, M2) mit den Steuermitteln (CTR) verbundene Auswahlmittel (SLC) enthalten, die fortlaufend die momentane Zeitlage (FN = 2) ermitteln, um den Anfang eines jeden der mindestens zwei Teile zu bestimmen, und die dann aus den mindestens zwei verschiedenen Verfahren (TBL; LGNR) zur Erzeugung der Frequenzsprungfolgen dasjenige (TBL) auswählen, nach denen die Steuermittel (CTR) den Frequenzlagenwechsel steuern.

3. Drahtloses Telekommunikationssystem (CTS) nach Anspruch 1, dadurch gekennzeichnet, daß
die Basisstation (BS) und die Teilnehmerendgeräte (M1, M2) Speichermittel enthalten, in denen eine vordefinierte Frequenzsprungfolge abgespeichert ist, die die erste Frequenzsprungfolge (SHS) bildet, und daß die Steuermittel (CTR) entsprechend dem ersten Verfahren, das ein Speicherleseverfahren (TBL) ist, aus den Speichermitteln diese vordefinierte Frequenzsprungfolge (SHS) lesen und zur Übertragung von Registrierungssignalen für den Aufbau einer Funkverbindung den Frequenzwechsel nach dieser vordefinierten Frequenzsprungfolge (SHS) steuern.

4. Drahtloses Telekommunikationssystem (CTS) nach Anspruch 1, dadurch gekennzeichnet, daß
die Basisstation (BS) an die Teilnehmerendgeräte (M1, M2) ein Codewort (CW) sendet, daß die Steuermittel (CTR) entsprechend dem zweiten Verfahren, das ein iteratives Verfahren (LGNR) zur Erzeugung einer Pseudo-Zufallsfolge ist, mittels des Codeworts (CW) eine pseudo-zufällige Frequenzsprungfolge berechnen, die die zweite Frequenzsprungfolge (THS) bildet, und daß die Steuermittel (CTR) zur Registrierung der Teilnehmerendgeräte (M1, M2) den Frequenzwechsel nach dieser pseudozufälligen Frequenzsprungfolge (SHS) steuern.

5. Drahtloses Telekommunikationssystem (CTS) nach Anspruch 1, dadurch gekennzeichnet, daß
das Zeitraster ein aus mehreren Zeitrahmen gebildeter TDMA-Multirahmen (MF) ist, daß jeder Zeitrahmen mehrere Zeitschlitze enthält, wodurch eine jede Zeitlage durch die Nummer (FN) des entsprechenden Zeitrahmens bestimmt ist.

6. Drahtloses Telekommunikationssystem (CTS) nach Anspruch 1, dadurch gekennzeichnet, daß
die mindestens eine Basisstation (BS) ein Synchronisationssignal auf einem durch mindestens eine vorgegebene Zeitlage (FN = 1, 26) und durch eine vorgegebene Frequenzlage (f0) bestimmten Signalisierungskanal (BCH) sendet, und daß die mobilen Teilnehmerendgeräte (M1, M2) das Synchronisationssignal empfangen und sich auf dieses aufsynchronisieren.

7. Drahtloses Telekommunikationssystem (CTS) nach den Ansprüchen 3 und 6, dadurch gekennzeichnet, daß
jedes Teilnehmerendgerät (M1), das sich aufsynchronisiert hat, entsprechend der ersten Frequenzsprungfolge (SHS) die Frequenzlage zum Senden und Empfangen der Registrierungssignale wechselt.

8. Drahtloses Telekommunikationssystem (CTS) nach den Ansprüchen 3, 4 und 6, dadurch gekennzeichnet, daß
jedes Teilnehmerendgerät (M1), das sich aufsynchronisiert und registriert hat, zum Aufbau einer Rufverbindung entsprechend der zweiten Frequenzsprungfolge (THS) die Frequenzlage zum Empfangen von Suchrufsignalen und zum Senden von Antwortsignalen wechselt.

9. Basisstation (BS), die in einem ein drahtlosen Telekommunikationssystem (CTS) mit mobilen Teilnehmerendgeräten (M1, M2) Funksignale auf einem Signalisierungskanal innerhalb eines in Zeitlagen (FN) unterteilten Zeitrasters (MF) und entsprechend einer vorgebbaren Frequenzsprungfolge in wechselnden Frequenzlagen (f1, f2,..., f6) austauscht,
**gekennzeichnet durch**
ein Steuermittel (CTR) zur Steuerung des Frequenzlagenwechsels, das für einen ersten Teil des Zeitrasters (MF) nach einem ersten Verfahren (TBL) eine erste Frequenzsprungfolge (SHS) und für mindestens einen weiteren Teil des Zeitrasters (MF) nach einem zweiten Verfahren (LGNR) eine zweite Frequenzsprungfolge (THS) erzeugt.

10. Mobiles Teilnehmerendgerät (M1), das in einem drahtlosen Telekommunikationssystem (CTS) mit einer Basisstation (BS) Funksignale auf einem Signalisierungskanal innerhalb eines in Zeitlagen (FN) unterteilten Zeitrasters (MF) und entsprechend einer vorgebbaren Frequenzsprungfolge in wechselnden Frequenzlagen (f1, f2,..., f6) austauscht,
**gekennzeichnet durch**
ein Steuermittel (CTR) zur Steuerung des Frequenzlagenwechsels, das für einen ersten Teil des Zeitrasters (MF) nach einem ersten Verfahren (TBL) eine erste Frequenzsprungfolge (SHS) und für mindestens einen weiteren Teil des Zeitrasters (MF) nach einem zweiten Verfahren (LGNR) eine zweite Frequenzsprungfolge (THS) erzeugt.
